Europäisches Patentamt

European Patent Office

Office européen des brevets

(19)

(11)  **EP 1 081 482 A2**

(12)  **EUROPÄISCHE PATENTANMELDUNG**

(43) Veröffentlichungstag:
    **07.03.2001  Patentblatt 2001/10**

(51) Int. Cl.$^7$: **G01M 3/28**

(21) Anmeldenummer: **00118635.2**

(22) Anmeldetag: **29.08.2000**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **06.09.1999 DE 19942464**

(71) Anmelder: **Ehrt, Rainer**
    **52072 Aachen (DE)**

(72) Erfinder: **Ehrt, Rainer**
    **52072 Aachen (DE)**

(74) Vertreter:
    **Bauer, Dirk, Dipl.-Ing. Dipl.-Kfm.**
    **Bauer & Bauer,**
    **Patentanwälte,**
    **Am Keilbusch 4**
    **52080 Aachen (DE)**

(54)  **Verfahren und Vorrichtung zur Bestimmung des durch einen Prüfflächenabschnitt eines Körpers hindurchtretenden Volumenstroms oder Massenstroms**

(57)    Ein Verfahren zur Bestimmung des durch einen Prüfflächenabschnitt eines Körpers hindurchtretenden Volumenstroms oder Massestroms eines Fluids, wobei der Körper eine Trennung zwischen zwei Umgebungen bildet, weist die folgenden Verfahrensschritte auf.

a) Der Prüfflächenabschnitt wird mit dem unter einem Druck $p_R$ stehenden Fluid beaufschlagt, das sich innerhalb eines abgeschlossenen Prüfvolumens befindet,

b) mindestens ein an den Prüfflächenabschnitt angrenzender Kompensationsflächenabschnitt wird mit demselben unter einem Druck $p_F$ stehenden Fluid beaufschlagt, daß sich innerhalb mindestens eines Kompensationsvolumens befindet;

c) der Druck $p_R$ in dem Prüfvolumen wird während der gesamten Meßzeit genau so groß wird der Druck $p_F$ in dem mindestens einen Kompensationsvolumen gehalten;

d1) es wird der Volumenstrom oder Massestrom bestimmt, der dem Prüfvolumen zugeführt oder aus diesem abgeführt wird, um die Druckgleichheit zwischen $p_R$ und $p_F$ zu erhalten oder

d2) es wird der Druckverlauf $p_R$ (t) über der Zeit aufgezeichnet, ohne daß dem Prüfvolumen ein Volumenstrom oder Massenstrom zugeführt oder aus diesem abgeführt wird.

Abb. 2 Rohr mit Muffe und eingeschobenem 3- Kammer Packer

EP 1 081 482 A2

**Beschreibung**

Die Erfindung betrifft ein Verfahren zur Bestimmung des durch einen Prüfflächenabschnitt eines Körpers hindurch tretenden Volumenstroms oder Massestroms sowie eine Vorrichtung zur Durchführung dieses Verfahrens.

Aus der DE 40 12 619 A 1 ist ein Verfahren und eine Vorrichtung zum Orten von Leckstellen in Abwasserkanälen bekannt. Die Ortung der Leckstellen erfolgt mit Hilfe einer fernsteuerbaren und fahrbaren Einrichtung, die Mittel zum Erzeugen eines Überdrucks und zwei Kammerwände zur Abdichtung einer Druckkammer aufweist, die durch die Kammerwände und den dazwischen liegenden Abschnitt des Abwasserkanals gebildet ist. Zur Kontrolle der Dichtheit der Kammerwände gegenüber dem Abwasserkanal werden die Kammerwände jeweils in Doppelbauweise ausgeführt. Nach Aufbringung von Überdruck in den schmalen Zwischenräumen dieser Doppelwände werden in diesen Zwischenräumen die Zeitkonstanten des Druckabfalls gemessen. Bei ausreichender Dichtheit wird anschließend die mittlere Prüfkammer mit Druck beaufschlagt, anderenfalls wird der vorangegangene Vorgang unter veränderten Rahmenbedingungen wiederholt. Hierdurch wird eine Kontrolle über die hinreichende Abdichtung der Druckkammer selbst ermöglicht. Zu diesem Zweck sind in der Vorrichtung mindestens drei Druckmeßstellen vorhanden, die einerseits in der mittleren Prüfkammer sowie in den beiden seitlichen Zwischenräumen der Doppelwände angeordnet sind.

Ein Nachteil dieser bekannten Vorrichtung bzw. Verfahrensweise ist darin zu sehen, daß quantitative Aussagen über die Größe der Undichtigkeit nur schätzungsweise möglich sind. So läßt der Druckverlauf innerhalb der Zwischenräume keinen direkten Rückschluß auf die Dichtwirkung der den Prüfraum umgrenzenden Dichtungen zu. Tritt eine Undichtigkeit in den vorgelagerten Kammern durch unzureichende Dichtwirkung oder durch eine Durchlässigkeit dieses Rohrabschnitts auf, so führt dies zu einem Versagen des bekannten Verfahrens. Außerdem läßt sich mit diesem reinen Meßverfahren allein feststellen, ob der Druck in den Zwischenkammern hinreichend langsam abfällt, d.h. ob die Messung der Dichtheit der Prüfkammer überhaupt sinnvoll vorgenommen werden kann.

Des weiteren ist aus der DE 198 29 969 A1 eine Vorrichtung zum Überprüfen der Dichtigkeit von Muffenverbindungsbereichen an Abwasserrohren bzw. -kanälen bekannt. Eine pneumatisch betriebene Aufweiteinheit begrenzt den Muffenverbindungsbereich zu beiden Seiten hin. Im Falle von Undichtigkeiten bei den den zentralen Prüfraum begrenzenden Dichtungen gelangt das Medium aus dem Prüfraum in die vorgelagerten Räume. Im Falle einer ausreichenden Dichtwirkung der zweiten Dichtungen jeweils am axialen Ende der Vorrichtung, erfolgt in den vorgelagerten Räumen ein Druckanstieg. Erfolgt ein solcher Druckanstieg nicht, beispielsweise weil die endseitigen Dichtungen von schlechter Qualität sind oder eine Durchlässigkeit dieses Rohrabschnitts besteht, so kann trotz der nicht gegebenen Dichtheit der beiden zentralen Dichtungen eine daraus resultierende Verfälschung des Meßergebnisses nicht festgestellt werden. Ein entsprechend großer Druckverlust in dem zentralen Prüfraum wird mangels Druckanstieg in den vorgelagerten Räumen nämlich in diesem Fall voll der scheinbaren schlechten Muffenverbindung zugeschrieben.

Ferner ist in der WO 92 05418 noch eine hydrostatische Testvorrichtung beschrieben, die für die Feststellung von Lecks in Rohrsystemen vorgesehen ist. Die Vorrichtung besitzt einen mittleren ringförmigen Prüfraum und zwei jeweils in axiale Richtung vorgelagerte Räume. Wenn die Dichtungen der vorgelagerten Räume mit Druck beaufschlagt werden, vergrößern sie ihr Volumen und verdrängen dadurch Volumen dieser nun vollständig abgeschlossenen Räume. Durch die Volumenveränderung ergibt sich ein Druckanstieg in diesen Räumen, ohne daß eine separate Luftversorgung nötig wäre. Der zeitliche Verlauf dieser Drücke läßt ungefähre Rückschlüsse auf die Dichtwirkung zu. Als problematisch ist es wiederum anzusehen, daß Aussagen darüber, welche Dichtungen aufgrund mangelnder Dichtheit dazu führen, daß ein Druckabfall in den vorgelagerten Räumen auftritt, nicht möglich sind.

Der Erfindung liegt die Aufgabe zu Grunde, ein Verfahren zur Bestimmung des durch einen Prüfflächenabschnitt eines Körpers hindurchtretenden Volumen- oder Massestroms vorzuschlagen, das sehr zuverlässige Meßergebnisse liefert und dennoch auf einfache und kostengünstige Weise ausgeführt werden kann. Des weiteren besteht die Aufgabe darin, eine Vorrichtung vorzuschlagen, mit der ein solches Verfahren ausführbar ist.

Erfindungsgemäß wird diese Aufgabe durch ein Verfahren gemäß dem Patentanspruch 1 sowie eine Vorrichtung gemäß dem Patentanspruch 6 gelöst. Vorteilhafte Ausgestaltungen der Erfindung ergeben sich aus den jeweiligen Unteransprüchen.

Der Vorteil der Erfindung besteht darin, daß aufgrund der andauernden Druckgleichheit zwischen dem Druck in dem Prüfvolumen und dem Druck in dem mindestens einen Kompensationsvolumen keine Ausgleichsströmungen zwischen den beiden vorgenannten Volumina auftreten. Auf regelungstechnische Weise wird somit ein Zustand vollständiger Dichtheit der den Prüfraum umgebenden Dichtung zumindest über die Länge der Begrenzungslinie zwischen dem Prüfflächenabschnitt und dem Kompensationsflächenabschnitt hergestellt. Ist dessen Länge sowie die Länge des Umfangs des Prüfflächenabschnitts bekannt, können diese Längen ins Verhältnis gesetzt werden und der dem Kompensationsvolumen zugeführte Volumen- oder Massestrom auf den gesamten Umfang des Prüfflächenabschnitts umgerechnet werden. Voraussetzung für diese nur teilweise Umschließung des Prüfflächenabschnitts durch den oder die Kompensationsflächenabschnitte ist eine möglichst gleichbleibendes Maß der Dichtheit auf dem gesamten Umfang des Prüfflächenabschnitts.

Vorzugsweise umschließt der/ umschließen die Kompensationsflächenabschnitt(e) den Prüfflächenabschnitt jedoch vollständig, da in diesem Fall ein Durchtritt des Fluids im Bereich des Umfangs des Prüfflächenabschnitts sicher ausgeschlossen werden kann.

Insbesondere im Bereich der Leckageprüfung von kurvig verlegten Rohrkörpern ist eine besonders kurze Bauweise der verwendeten Vorrichtung wünschenswert. In diesem Fall ist die Verwendung eines sog. Zweikammerpackers anstelle eines sog. Dreikammerpackers sinnvoll, der lediglich ein Kompensationsvolumen aufweist und daher auch im Bereich von engen Radien einsetzbar ist.

Die bei Verfahren nach dem Stand der Technik kritische Abdichtung der Meßvorrichtung gegenüber den druckbeaufschlagten Teilen des Prüflings spielt bei dem erfindungsgemäßen Verfahren keine nennenswerte Rolle mehr für das Meßergebnis. Die Grenzen der Aussagekraft findet das anmeldungsgemäße Verfahren ausschließlich in der Leistungsfähigkeit der Fluidversorgung der Volumina und in der Qualität der eingesetzten Regelungstechnik. Aufgrund der somit vergleichsweise geringen Anforderungen an die Qualität der physikalischen Dichtungen sind mit Hilfe des erfindungsgemäßen Verfahrens auch Messungen möglich, obwohl das Dichtungsmaß schlecht ist, wie z.B. wenn die verwendete Vorrichtung über die Oberfläche des zu vermessenden Körpers entlang gefahren wird.

Da die Meßvorrichtung nur mäßige Anforderungen an die Ressourcenversorgung stellt, sind die Versorgungseinrichtungen innerhalb der Vorrichtung anzuordnen, wodurch ein nicht stationärer, autarker Einsatz möglich wird.

Für den Einsatz wird die erfindungsgemäße Vorrichtung an nur einer der eine Trennung zwischen zwei Umgebungen bildenden Körperseiten angebracht, z. B. der Innen- oder der Außenseite einer Rohrmuffe. Bei eingeschränkter Zugänglichkeit erleichtert es diese Methode erheblich, die Meßvorrichtung am Einsatzort zu positionieren.

Je nach baulicher Ausführung eignet sich die Meßvorrichtung für kleine Körper (Kanülen, Flächenfittings) im Submillimeterbereich sowie für große Meßoberflächen (Abwasserrohre, Tunnel, Höhlungen, Bergbaustollen, Tragflächentanks, Triebwerke und Rümpfe an Flugzeugen, Kellerböden, Klärwerkbecken, Silos, Schornsteine usw.). Als Form der Vorrichtung ist bei kleinen zylindrischen Meßoberflächen eine umschließende Hülse vorzuziehen, bei großen Hohlzylindern eine einschiebbare zylinderähnliche (Packer), und bei ebenen Flächen eine ebene flächige Ausführung mit einem beispielsweise kreisförmigen Querschnitt. Bei gebogenen Meßobjekten können Gelenke vorgesehen werden oder die Vorrichtung insgesamt flexibel ausgebildet oder starr in der gerade erforderlichen Form hergestellt werden. Sollen mehrere benachbarte Undichtheiten oder Regelmäßigkeiten von Undichtheiten im Flächenverlauf (Siebe oder poröse Strukturen) vermessen werden, sind viele benachbarte Meßstellen, wie z. B. in einer Wabenstruktur, einer Gruppe von quader- oder Kuchenstück- oder andersförmigen Meßstellen möglich. Wird eine Form mit vielen benachbarten Meßstellen mit der Ausführung für Rohre kombiniert, ist innerhalb des Rohres eine genaue Ortung der Leckposition möglich.

Grundsätzlich ist es erforderlich, daß für die Messungen der Druck beiderseits der möglichen Undichtheitsstelle bekannt ist oder gemessen wird. Dann sind selbst Messungen an in Betrieb befindlichen Prüflingen, (d. h. beispielsweise Rohre unter Betriebsdruck mit Durchströmung eines bestimmten Mediums) möglich.

Je nach Einsatzfall ist die Ausführung der Meßvorrichtung oder der Meßvorrichtung in Kombination mit dem Meßobjekt bei einer Beschleunigung der Anordnung insgesamt zur berticksichtigen, da hierdurch die Meßergebnisse beeinflußt werden. Das Beeinflussungsmaß kann in Verbindung mit dem Beschleunigungsvektor berechnet werden. Dies spielt z. B. eine Rolle beim Einsatz in Zentrifugen oder anderen beschleunigten Meßobjekten bei hohem spezifischen Gewicht des Meßmediums in Verbindung mit niedrigen Meßdrücken.

Das zum Einsatz kommende Medium kann Luft oder auch ein anderes strömungsfahiges Medium sein, je nach Materialverträglichkeit. Um Verunreinigungen des Betriebsmediums bei Messungen an in Betrieb befindlichen Meßobjekten durch einen Mediumübertritt zu vermeiden, kann das gleiche Medium eingesetzt werden, wie es sich in oder an dem Meßobjekt befindet.

Bei hohen Leckströmen an den äußeren Dichtungen treten durch die hohen Nachströmgeschwindigkeiten Verwirbelungen des Mediums in den Kompensationsvolumina auf. Diese Verwirbelungen können die (statische) Druckmessung in dem Kompensationsvolumen beeinflussen. Dem kann durch geeignete Maßnahmen zur Beruhigung der Strömung entgegengewirkt werden wie z. B. durch Befüllung der Kompensationsvolumina mit strömungsdämpfendem Material wie Stahlwolle oder Siebe. Hohe Leckströme können insbesondere auch dann auftreten, wenn die Meßobjektoberfläche schlecht abdichtbar ist oder wenn die Messungen während einer Bewegung während der Meßvorrichtung entlang der Oberfläche erfolgen.

Gemäß einer Weiterbildung können zu einer oder zu beiden Seiten des Prüfvolumens auch mehrere sequentiell vorgelagerte Kompensationsvolumina angeordnet werden. Jedes zusätzliche vorgelagerte Kompensationsvolumen beruhigt die Luftverwirbelungen der nächsten zum Prüfvolumen hin benachbarten Kompensationsvolumina exponentiell und steigert die Meßgenauigkeit daher erheblich. Schwierige Messungen an rauhen Oberflächen oder während einer Bewegung der Vorrichtung entlang der Oberfläche des Meßobjekts profitieren sehr deutlich davon.

Werden das Prüfvolumen und das mindestens eine Kompensationsvolumen mit Unterdruck beaufschlagt, so kann hierdurch eine Haftwirkung an dem Meßobjekt erzielt werden, wodurch die Dichtwirkung und die Meßgenauigkeit steigen.

Bei kompressiblen Medien können alternativ anstelle von Druckmessungen auch Dichtemessungen vorgenommen werden. Bei idealen Gasen verhalten sich Druck und Dichte gemäß der Gasgleichung für ideale Gase direkt proportional zueinander. Wird bei Gasen der Massestrom durch zusätzliche Berücksichtigung der Temperatur gemessen (anstelle lediglich des Volumenstromes) entfällt nach der Druckbeaufschlagung die Beruhigungszeit für den Temperaturausgleich, da der Gasdruck sich linear proportional zur Gastemperatur verhält.

Eine besonders vorteilhafte Ausgestaltung der Erfindung besteht darin, daß zur Aufrechterhaltung der Druckgleichheit zwischen dem Druck in dem Prüfraum und dem Druck in dem mindestens einen Kompressionsraum, die Geschwindigkeit des Fluidstroms in mindestens einer Shunt-Verbindung zwischen dem Prüfraum und dem mindestens einen Kompensationsraum gemessen, und auf Null geregelt wird. Der Strömungswiderstand der Shunt-Verbindung sollte vorzugsweise wesentlich geringer als der Widerstand der Strömungsquerschnitte im Bereich der Dichtungen zwischen den Prüfvolumen und dem jeweils benachbarten Kompensationsvolumen sein, um die Strömungssensitivität der Meßtechnik im Bereich der Shunt-Verbindungen zu erhöhen. In diesem Fall können die Strömungen durch die letztgenannten größenmäßig nicht genau bekannten Querschnitte vernachlässigt werden. Ungeachtet des Durchsatzes in beiden Strömungspfaden ist zum einen deren Strömungsrichtung immer identisch und zum anderen der Nulldurchgang beider Strömungskennlinien im Moment der Druckgleichheit zwischen benachbarten Volumina gegeben. Eine Druckgleichheit zwischen den benachbarten und über eine Shunt-Verbindung gekoppelten Volumina besteht dann, wenn keine Ausgleichsströmung stattfindet, d. h. wenn die Strömungsgeschwindigkeit in der Shunt-Verbindung gleich Null ist. Diese Strömungsgeschwindigkeit kann vorzugsweise auf kalorimetrische Weise durch eine entsprechende Meßvorrichtung innerhalb der Shunt-Verbindung gemessen werden. Derartige Meßvorrichtungen benötigen lediglich einen kleinen Bauraum. In diesem Fall sind Absolutdruckmessungen in den Kompensationskammern nicht erforderlich, sondern es erfolgt vielmehr eine Differenzdruckmessung über die Geschwindigkeit der (unterdrückten) Ausgleichsströmung. Die Meßeinrichtung muß daher lediglich für einen einzigen Arbeitspunkt, nämlich Differenzdruck gleich Null, kalibriert werden. Dies ist viel einfacher, effektiver und genauer als einen gesamten Meßbereich abzugleichen. Außerdem werden Linearitätsfehler vermieden. Das zugrunde liegende Funktionsprinzip ist analog zu dem der elektrischen Meßbrücke.

Der vorliegenden Erfindung liegt die Erkenntnis zugrunde, daß Strömungen an einer Dichtung vorbei immer durch unzureichende Abdichtung in Verbindung mit einem Druckgradienten ungleich Null entstehen. Ist die Qualität der Dichtung nicht weiter beeinflußbar, kann die Meßgenauigkeit durch Manipulation des Druckgradienten beeinflußt werden, worin genau der Ansatz des anmeldungsgemäßen Verfahrens besteht.

Bei nicht kompressiblen Fluiden ist es schwierig einen genauen Druck einzustellen und aufrecht zu erhalten. Hier kommt ein mit Gas gefülltes zusätzliches Druckgefäß zum Einsatz, aus dem unten das inkompressible Fluid entweicht, während oben z. B. ein gasförmiges Fluid nachgeführt wird.

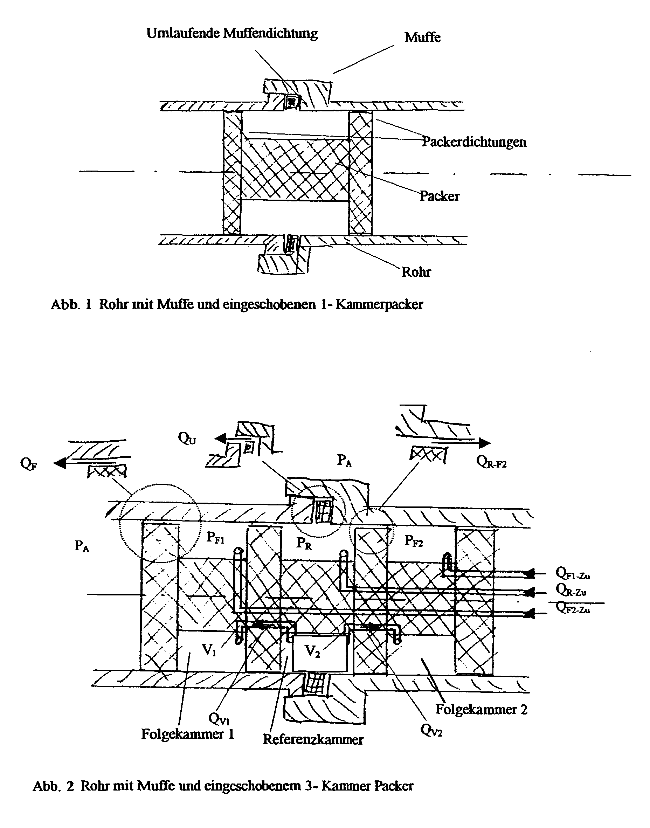

Das erfindungsgemäße Verfahren wird nachfolgend anhand mehrerer Ausführungsbeispiele einer zu dessen Durchführung geeigneten Vorrichtung näher beschrieben. Es wird hiermit auf die Abbildungen 1 bis 4 der anliegenden Zeichnung Bezug genommen. Abb. 1 zeigt eine Vorrichtung nach dem Stand der Technik.

Exemplarisch wird die Vorrichtung anhand eines sogenannten Dreikammerpackers (Abb. 2) beschrieben, der zusätzlich zu seiner mittleren Prüfkammer zwei seitliche Kompensationskammern aufweist. In diesen Kompensationskammern muß während der Meßperiode stets Druckgleichheit zur Referenzkammer herrschen, um Ausgleichsströmungen an den Dichtungen zur Referenzkammer zu verhindern. Während beim Stand der Technik stets ein Druckgefälle zwischen der Prüfkammer und den Kompensationskammern besteht, da in letzteren der Druck nicht geregelt wird, finden Ausgleichsströmungen unbekannter Größe statt. Hingegen werden derartige Ausgleichsströmungen bei dem erfindungsgemäßen Verfahren aufgrund der stets eingeregelten Druckgleichheit sicher vermieden.

Zur Optimierung kann die Meßvorrichtung um Shunt-Verbindungen (Nebenschlußverbindungen) zwischen der Referenzkammer und den Kompensationskammern erweitert werden. Damit werden die Ausgleichsströmungen an den Packerdichtungen klein gegenüber den an den Shunt-Verbindungen gehalten.

Regelabweichungen der in der Praxis nicht idealen Regeistrecken führen zu $P_{F1} \approx P_{F2} \approx P_R$, und damit zu $Q_{R-F1} \neq 0$ und $Q_{R-F2} \neq 0$. Die Strömung durch die Undichtigkeit der Muffe $Q_U$ ergibt sich aus:

$$Q_U = Q_{R-ZU} - (Q_{R-F1} + Q_{R-F2} + Q_{V1} + Q_{V2}) \qquad (1)$$

Ist aber $\gamma_{V1} \gg \gamma_{R-F1}$ und $\gamma_{V2} \gg \gamma_{R-F2}$, sind die Strömungen $Q_{R-F1} \approx 0$ und $Q_{R-F2} \approx 0$ und werden im folgenden vernachlässigt.

In Verbindung mit (1) führt dies zur vereinfachten Gleichung

$$Q_U=Q_{R-ZU}-(Q_{V1}+Q_{V2}) \qquad (2)$$

Da alle Strömungen dieser Gleichung außer Qu meßbar sind, ist Qu jetzt errechenbar.

Im Falle vorhandener Shunt-Verbindungen, kann der Druckausgleich zwischen den Kammern auch durch diese Verbindungen erfolgen und die Versorgungsumleitungen $Q_{F1-ZU}$ und $Q_{F2-ZU}$ entfallen, sofern die Ausgleichsströmungen $Q_{V1}$ und $Q_{V2}$ im wesentlichen durckverlustfrei erfolgen und in Betrag und Richtung gemessen werden. Werden diese Mengen rechnerisch von der Gesamtmenge zugeführter Strömung abgezogen, bleibt nur die Menge übrig, die die Muffenundichtigkeit durchströmt hat.

Zur Messung der Undichtigkeit können verschiedene Varianten angewendet werden, z. B.:

1. Werden während der Meßperiode die Drücke aller Kammern gleich und konstant gehalten, ist die Durchströmung $D_U$ durch die Muffendichtigkeit gleich der nachgeführten Menge, dem Massestrom $Q_{R-ZU}$ (**Abb. 2**), und kann direkt gemessen werden. Wird anstatt des Massestroms der Volumenstrom gemessen, muß außerdem der Druck und die Temperatur gemessen werden, um nach der allgemeinen Gasgleichung (3) die nachgeführte Menge in Normliter (N1) umzurechnen.

2. Soll die Undichtigkeit nach der Norm DIN EN 1610 oder den Vorschlägen der Abwassertechnischen Vereinigung (ATV) für die Dichtigkeitsprüfung von Abwasserrohren gemessen werden, wird die Referenzkammer mittels Luft auf 0,2 bar Überdruck gebracht und dann die Versorgung verschlossen. Anschließend darf in den folgenden 2 Minuten der Druck um bis zu 15 mbar (Druck und Zeit abhängig vom Rohrdurchmesser) absinken, um den Vorgaben der Dichtigkeit zu genügen. Während der Meßzeit muß der Differenzdruck zwischen den Kompensationskammern und der Referenzkammer auf Null gehalten werden. Die in diesem Fall über die undichte Muffe entwichene Luftmenge kann mittels der allgemeinen Gasgleichung (3) ausgerechnet werden.

$$P1*V1/T1=P2*V2/T2 \qquad (3)$$

P1, V1 und T1 = Druck, Volumen und Temperatur zu Meßbeginn

P2, V2 und T2 = Druck, Volumen und Temperatur zum Ende der Meßperiode

Im Falle von 2, werden höhere Anforderungen an die Regeleinrichtungen gestellt, da die Drücke in den Kompensationskammern dem sich ändernden Druck in der Referenzkammer folgen müssen, anstatt einen konstanten Druck aufrecht zu erhalten, wie in 1.

Um längere Kanalrohrabschnitte (Haltungen) auf einmal zu prüfen, kann der Dreikammerpacker aus Abb. 2 auch in getrennte Einheiten aufgeteilt werden. Dazu werden an beiden Enden der Haltung modifizierte Einkammerpacker positioniert, die je die Funktion einer Kompensationskammer übernehmen. Der große Abschnitt zwischen diesen beiden Packern stellt dann das Prüfvolumen dar. Besonders vorteilhaft ist dieses Verfahren, wenn in der Haltung noch zusätzliche Abzweigungen vorhanden sind, die dann von weiteren Einkammerpackern verschlossen werden können.

Alternativ kann durch dieses verteilte System auch eine kleines Prüfvolumen zwischen zwei großen Kompensationsvolumina hergestellt werden. Dazu wird die Haltung zu beiden Seiten mit einfachen Dichtkissen abgesperrt und ein modifizierter Einkammerpacker dazwischen positioniert. Dies hat den Vorteil der besonders einfachen Meß- und Regelmöglichkeit, weil der Kompensationsdruck durch sein großes Volumen eine so große Zeitkonstante hat, daß sich der Druck hier bequem per Hand regeln läßt. Sind alle Drücke eingeregelt, kann der modifizierte Einkammerpacker messend durch die Haltung gezogen werden. Da der modifizierte Packer um ein Rohr aufgebaut ist, ergibt sich kein zusätzlicher Überdruck in der der Ziehrichtung zugewandten Seite des Packers, sondern es erfolgt ein Druckausgleich über die Packermitte.

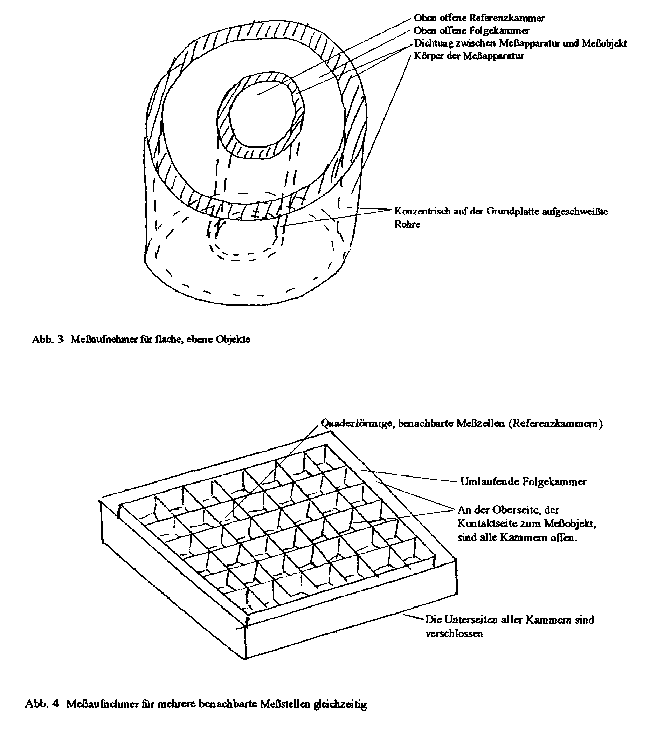

Sollen ebene, oder nahezu ebene Flächen vermessen werden, kann die bauliche Ausführung mit konzentrisch angeordneten Kammern ausgeführt werden (**Abb. 3**), wie z. B. zwei ineinander geschobene Zylinder, die beide einseitig an der gleichen Seite verschlossen sind. Die innere Kammer stellt dann die Referenzkammer und die äußere(n), vorgelagerte(n) Kammer(n), die Kompensationskammer(n) dar. Hier kann die Meßvorrichtung besonders einfach mit Rollen versehen werden, um kontinuierlich zu messen, während die Meßvorrichtung über das Meßobjekt gefahren wird. Alternativ kann anstatt Rollen auch Gleitmittel verwendet werden.

Viele einseitig verschlossene Kammern in wabenmusterähnlichen Anordnungen oder mit Gruppen von quaderförmigen Meßzellen (**Abb. 4**) erlauben auch Messungen an mehreren benachbarten Stellen gleichzeitig. Die Wabenkammern stellen dann Referenzkammern dar. Die Anordnung der Waben wird in ihrer Gesamtheit von einer oder mehreren Kompensationskammern umschlossen. Diese Ausführung kann dazu benutzt werden, um die Position einzelner Undichtigkeiten zu lokalisieren und zu vermessen. Das Ergebnis kann dann als Potentialgefälle dargestellt werden.

Diese Anmeldung nimmt die Priorität der deutschen Patentanmeldung 199 42 464.0 vom 06.09.1999 in Anspruch. Hiermit wird auf die darin enthaltenen Ausführungen ausdrücklich Bezug genommen und diese zum Inhalt auch der vorliegenden Anmeldung gemacht.

**Patentansprüche**

1. Verfahren zur Bestimmung des durch einen Prüfflächenabschnitt eines Körpers hindurchtretenden Volumenstroms oder Massestroms eines Fluids, wobei der Körper eine Trennung zwischen zwei Umgebungen bildet, mit den folgenden Verfahrensschritten:

   a) Der Prüfflächenabschnitt wird mit dem unter einem Druck $p_R$ stehenden Fluid beaufschlagt, das sich innerhalb eines abgeschlossenen Prüfvolumens befindet,

   b) mindestens ein an den Prüfflächenabschnitt angrenzender Kompensationsflächenabschnitt des Körpers wird mit demselben unter einem Druck $p_F$ stehenden Fluid beaufschlagt, daß sich innerhalb mindestens eines Kompensationsvolumens befindet;

   c) der Druck $p_F$ in dem mindestens einen Kompensationsvolumen wird während der gesamten Meßzeit genau so groß wie der Druck $p_R$ in dem Prüfvolumen gehalten;

   d1) es wird der Volumenstrom oder Massestrom bestimmt, der dem Prüfvolumen zugeführt oder aus diesem abgeführt wird, um die Druckgleichheit zwischen $p_R$ und $p_F$ zu erhalten oder

   d2) es wird der Druckverlauf $p_R$ (t) über der Zeit aufgezeichnet, ohne daß dem Prüfvolumen ein Volumenstrom oder Massenstrom zugeführt oder aus diesem abgeführt wird.

2. Verfahren nach Anspruch 1, dadurch gekennzeichnet, daß der oder die Kompensationsflächenabschnitt(e) den Prüfflächenabschnitt vollständig umschließt bzw. umschließen.

3. Verfahren nach Anspruch 1 oder 2, dadurch gekennzeichnet, daß die Bestimmung des Volumenstroms oder Massestroms während einer Bewegung der verwendeten Vorrichtung entlang der Oberfläche des Körpers erfolgt.

4. Verfahren nach einem der Ansprüche 1 bis 3, dadurch gekennzeichnet, daß die den Prüfflächenabschnitt umgebenden Kompensationsflächenabschnitte wiederum von weiteren Kompensationsflächenabschnitten umgeben sind, die jeweils mit demselben unter dem Druck $p_F$ stehenden Fluid beaufschlagt werden, das sich innerhalb mindestens eines weiteren Kompensationsvolumens befindet, wobei der Druck $p_F$ oder die Drücke in dem oder den weiteren Kompensationsvolumen bzw. -volumina während des Meßzeitraums identisch mit dem Druck $p_R$ gehalten werden.

5. Verfahren nach einem der Ansprüche 1 bis 4, dadurch gekennzeichnet, daß zur Aufrechterhaltung der Druckgleichheit zwischen dem Druck $p_R$ in dem Prüfvolumen und dem Druck $p_F$ in dem mindestens einen Kompensationsvolumen die Geschwindigkeit des Fluidstroms in mindestens einer Shunt-Verbindung zwischen dem Prüfvolumen und dem mindestens einen Kompensationsvolumen gemessen und auf Null geregelt wird.

6. Vorrichtung zur Bestimmung des durch einen Prüfflächenabschnitt eines Körpers hindurchtretenden Volumenstroms oder Massestroms eines Fluids, wobei der Körper eine Trennung zwischen zwei Umgebungen bildet, mit folgenden Merkmalen:

   a) einem abgeschlossenen Prüfvolumen, das einerseits von dem Prüfflächenabschnitt und andererseits von Wandungen der Vorrichtung begrenzt wird;

   b) mindestens einem abgeschlossenen Kompensationsvolumen, das einerseits von einem Kompensationsflächenabschnitt des Körpers begrenzt wird, welcher wiederum an den Prüfflächenabschnitt angrenzt, und andererseits von Wandungen der Vorrichtung begrenzt wird;

   c) einer Druckversorgungs- und Regeleinrichtung mit der in dem Prüfvolumen und in dem mindestens einen Kompensationsvolumen ein Druck $p_R(t)$ und $p_F(t)$ erzeugbar und haltbar ist und;

   d) einer Meßeinrichtung mit der

   d1) der dem Prüfvolumen zugeführte oder der aus diesem abgeführte Volumenstrom oder Massenstrom meßbar ist, der zur Aufrechterhaltung des zeitlich konstanten Drucks $p_R$ (t) erforderlich ist oder
   d2) der Verlauf des Drucks $p_R$ (t) über der Zeit meßbar ist, wenn dem Prüfvolumen kein Volumenstrom oder Massestrom zugeführt oder abgeführt wird.

7. Vorrichtung nach Anspruch 6, dadurch gekennzeichnet, daß zwischen dem Prüfvolumen und jedem Kompensationsvolumen eine Shunt-Verbindung vorhanden ist, deren Strömungswiderstand wesentlich kleiner als der Strömungswiderstand in einem Dichtungsbereich ist, der an der Oberfläche des Körpers gleichfalls eine Verbindung zwischen dem Prüfvolumen und dem Kompensationsvolumen bildet, und daß die Strömungsgeschwindigkeit des Fluids mittels einer in der Shunt-Verbindung angeordneten Geschwindigkeitsmeßeinrichtung meßbar und mittels einer Regeleinrichtung durch entsprechende Druckregelung zumindest in jedem Kompensationsvolumen auf Null regelbar ist.

8. Vorrichtung nach Anspruch 7, dadurch gekennzeichnet, daß der Druck auch in dem Prüfvolumen regelbar ist.

9. Vorrichtung nach einem der Ansprüche 6 bis 8, dadurch gekennzeichnet, daß die Geschwindigkeitsmessung nach einem kalorimetrischen Meßprinzip arbeitet.

10. Vorrichtung nach einem der Ansprüche 6 bis 9, dadurch gekennzeichnet, daß die Kompensationskammern mit einem strömungsdämpfenden Material wie Stahlwolle oder Sieben versehen sind.

Umlaufende Muffendichtung          Muffe

Packerdichtungen

Packer

Rohr

Abb. 1 Rohr mit Muffe und eingeschobenen 1- Kammerpacker

$Q_U$

$Q_F$          $P_A$          $Q_{R-F2}$

$P_A$          $P_{F1}$       $P_R$      $P_{F2}$

$Q_{F1-Zu}$

$Q_{R-Zu}$

$Q_{F2-Zu}$

$V_1$          $V_2$

$Q_{V1}$

Folgekammer 1      Referenzkammer      $Q_{V2}$     Folgekammer 2

Abb. 2 Rohr mit Muffe und eingeschobenem 3- Kammer Packer

Oben offene Referenzkammer
Oben offene Folgekammer
Dichtung zwischen Meßapparatur und Meßobjekt
Körper der Meßapparatur

Konzentrisch auf der Grundplatte aufgeschweißte Rohre

Abb. 3 Meßaufnehmer für flache, ebene Objekte

Quaderförmige, benachbarte Meßzellen (Referenzkammern)

Umlaufende Folgekammer

An der Oberseite, der Kontaktseite zum Meßobjekt, sind alle Kammern offen.

Die Unterseiten aller Kammern sind verschlossen

Abb. 4 Meßaufnehmer für mehrere benachbarte Meßstellen gleichzeitig